# EUROPÄISCHE PATENTANMELDUNG

(11) **EP 0 919 270 A1**
(43) Veröffentlichungstag der Anmeldung: **02.06.1999**
(21) Anmeldenummer: 98118683.6
(22) Anmeldetag: 02.10.1998
(51) Int. Cl.: B01D 29/15, B01D 29/60, B01D 29/66

(54) **Filtereinrichtung**

(30) Priorität: 25.11.1997 DE 19752090
(71) Anmelder: Filterwerk Mann & Hummel GmbH, 71638 Ludwigsburg (DE)
(72) Erfinder: Gohle, Peter, 71636 Ludwigsburg (DE)
(74) Vertreter: Voth, Gerhard, Dipl.-Ing.

(57) **Zusammenfassung**

Es wird eine Filtereinrichtung mit einem in einem geschlossenen Gehäuse 10 angeordneten, radial durchströmbaren, hohlzylindrischen Filterelement 20 beschrieben. Am Gehäuse ist eine Öffnung zur Zuführung des zu filternden Mediums und eine Öffnung 12 zur Entnahme des gefilterten Mediums, sowie eine Öffnung 17 zur Entnahme des Filtrats vorgesehen. Die genannten Öffnungenb weisen jeweils ein Ventil 16, 19, 24 auf. Die Abreinigung der Filtereinrichtung erfolgt dadurch, daß Ventil 24 und 16 geschlossen werden und Ventil 19 geöffnet wird. Der Druckabbau über das Ventil 19 erzeugt einen Rückspülimpuls im Filtermedium.

## Beschreibung

Die Erfindung betrifft eine Filtereinrichtung nach dem Oberbegriff des Anspruchs 1.

Aus der DE PS 41 03 505 ist eine Filtereinrichtung bekannt. Diese weist einen in einem Gehäuse drehbar gelagerten, radial durchströmten Ringfilter auf, wobei das Gehäuse eine Zuströmöffnung und eine Abströmöffnung besitzt. Das Ringfilter wird gereinigt durch einen Abstreifer, welcher fest angeordnet ist. Beim Drehen des Ringfilters kann der Schmutz an der Außenseite desselben entfernt werden.

Der Nachteil einer solchen Einrichtung besteht darin, daß ein mechanisches Einwirken auf die Oberfläche des Ringfilters bzw. des Filterelements erforderlich ist. Dies führt dazu, daß Verschleißerscheinungen die Filterwirkung beeinträchtigen, dies führt aber gleichzeitig auch zu Krafteinwirkung auf die Schmutzpartikel die sich im ungünstigsten Fall in den Öffnungen des Filterelements verklemmen und anlagern und damit die wirksame Filterfläche erheblich verringern.

Der Erfindung liegt die Aufgabe zugrunde, die genannten Nachteile zu vermeiden und eine Filtereinrichtung zu schaffen, welche ohne mechanisches Einwirken mit hoher Effizienz abreinigbar ist.

Diese Aufgabe wird ausgehend von dem Oberbegriff des Anspruchs 1 durch dessen kennzeichnenden Merkmale gelöst.

Der wesentliche Vorteil der Erfindung liegt darin, daß eine zusätzliche Rückspüleinrichtung wie sie üblicherweise verwendet wird, beispielsweise ein Schaber oder Abstreifer nicht erforderlich ist, sondern durch das entsprechende Ansteuern der an der Filtereinrichtung angeordneten Ventile eine Abreinigung allein durch die hydrodynamische Wirkung des zu filternden Mediums erfolgt. Bei dem Schließen der Ventile an den Öffnungen zur Zuführung (Rohseite) und Ausgang (Reinseite) des zu filternden Mediums entsteht durch den Druckabbau im Reinflüssigkeitsbereich über den Schlammablaß eine Rückspülwirkung, die dazu führt, daß Reinflüssigkeit in den Rohflüssigkeitsraum einströmt und dabei eventuell an dem Filterelement anhaftende Schmutzpartikel entfernt.

Gemäß einer Ausgestaltung der Erfindung erfolgt das Schließen bzw. Öffnen der Ventile impulsartig

Das Filterelement kann gemäß einer weiteren Ausgestaltung der Erfindung eine mit Schlitzen versehene Filterfolie sein.

Selbstverständlich besteht auch die Möglichkeit, der Verwendung anderer Filtermedien. In jedem Fall ist eine Abreinigung der Schlitze bzw. Spalten nach einem gewissen Filtrationszeitraum über die entsprechende Ventilsteuerung erforderlich.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispieles näher erläutert.

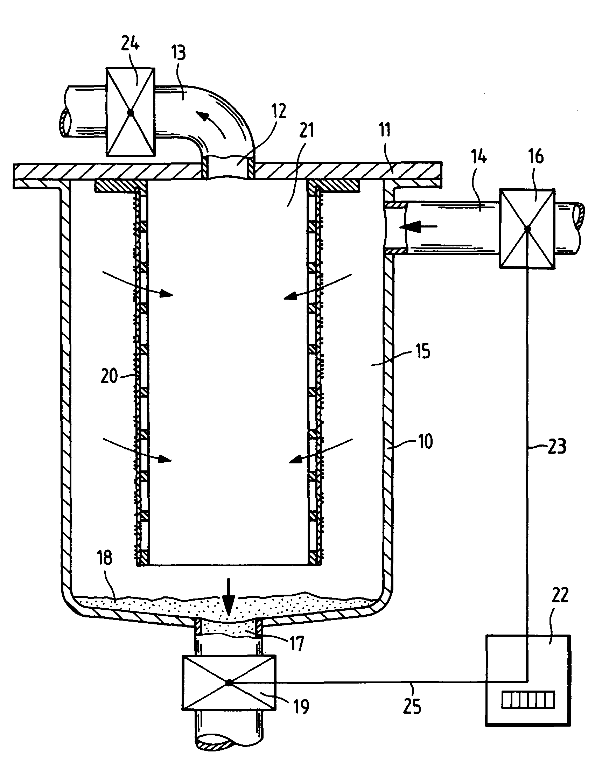

Die Figur zeigt eine Filtereinrichtung in einer Schnittdarstellung.

Die Filtereinrichtung besteht aus einem Gehäuse 10, welches mit einem Deckel 11 verschlossen ist. Im Deckel befindet sich eine Öffnung 12 durch welche das gefilterte Medium in einer Rohrleitung 13 abströmen kann. Das zu filternde Medium gelangt über die Leitung 14 in den Rohflüssigkeitsraum 15 der Filtereinrichtung. Die Leitung 14 ist mit einem Ventil 16 versehen zum Schließen dieser Leitung. Am Boden des Gehäuses 10 befindet sich ein Auslaß 17 für die Entnahme des sich am Boden ansammelnden Schmutzes 18. Diese Öffnung 17 ist ebenfalls mit einem Ventil 19 versehen. Das über die Leitung 14 einströmende Medium verteilt sich im Rohflüssigkeitsraum 15, strömt von dort durch ein hohlzylindrisches Filterelement 20 und verläßt gereinigt die Filtereinrichtung über die Öffnung 12.

An dem hohlzylindrischen Filterelement 20 sammelt sich am Außenmantel der abgeschiedene Schmutz an, dieser muß von Zeit zu Zeit von dieser Oberfläche entfernt werden. Hierzu wird impulsweise Ventil 16, 24 geschlossen und, Ventil 19 geöffnet. Aufgrund des Flüssigkeitsdruckes im Reinflüssigkeitsbereich 21 findet durch Entspannung eine Umkehrströmung statt, d.h. die Reinflüssigkeit fließt nunmehr in Richtung des Rohflüssigkeitsraums 15 und nimmt dabei den an der Oberfläche des Filterelements anhaftende Schmutz mit und trägt ihn über die Öffnung 17 aus bzw. wird sich aufgrund der Schwerkraft am Boden des Gehäuses 10 ansammeln und beim nächsten Öffnen des Ventils 19 ausgetragen.

Die Ventile 16, 19, 24, können auf einer gemeinsamen Welle angeordnet, aber auch einzeln über eine geeignete Seutereinheit getätigt werden.

## Patentansprüche

1. Filtereinrichtung mit einem in einem geschlossenen Gehäuse angeordneten, radial durchströmbaren, holzylindrischen Filterelement, eine am Gehäuse angeordneten Öffnung zur Zuführung des zu filternden Mediums und eine Öffnung zur Entnahme des gefilterten Mediums, sowie eine Öffnung zur Entnahme des Filtrats, **dadurch gekennzeichnet, daß** die Öffnung (14) zur Zuführung des zu filternden Mediums und die Öffnung (17) zur Entnahme des Filtrats sowie eine Öffnung (13) jeweils mit einem Ventil (16,19, 24) versehen ist und eine Rückspülung der Filtereinrichtung dadurch erfolgt, daß das Ventil (19) zur Entnahme des Filtrats geöffnet und gleichzeitig das Ventil (16, 24) geschlossen ist

2. Filtereinrichtung nach Anspruch 1, **dadurch gekennzeichnet, daß** das Ventil (19) erst öffnet wenn das weitere Ventil (16, 24) sicher geschlossen ist.

3. Filtereinrichtung nach einem der vorherigen Ansprüche, **dadurch gekennzeichnet, daß** Druckaufnehmer vorgesehen sind, welche auswertbare Signale an eine Steuereinheit liefern.

4. Filtereinrichtung nach einem der vorherigen Ansprüche, **dadurch gekennzeichnet, daß** wenigstens eine weitere Filtereinrichtung parallel geschaltet ist und gleichzeitig oder Phasenverschoben arbeitet.
